# FASCICULE DE BREVET EUROPEEN

(11) **EP 4 107 071 B1**
(45) Date de publication et mention de la délivrance du brevet: **27.05.2026**
(21) Numéro de dépôt: 21704592.1
(22) Date de dépôt: 17.02.2021
(51) Int. Cl.: B64D 11/06, B60N 2/02, B64D 11/00

(54) **SYSTÈME ET PROCÉDÉ DE COMMANDE D'UN SIÈGE D'AÉRONEF ET DE SON ENVIRONNEMENT VIA UNE CONNEXION SANS-FIL**
SYSTEM UND VERFAHREN ZUR STEUERUNG EINES FLUGZEUGSITZES UND SEINER UMGEBUNG ÜBER EINEN DRAHTLOSEN VERBINDUNG
SYSTEM AND METHOD OF CONTROL OF AN AIRCRAFT SEAT AND ITS ENVIRONMENT VIA A WIRELESS CONNECTION

(30) Priorité: 17.02.2020 FR 2001529
(43) Date de publication de la demande: 28.12.2022
(73) Titulaire: Airbus Atlantic, 17300 Rochefort (FR)
(72) Inventeur: IMBERT, Vincent, 17300 ROCHEFORT (FR); DUCHESNE, Julien, 17300 ROCHEFORT (FR)
(74) Mandataire: Santarelli
(86) Numéro de dépôt international: PCT/EP2021/053895
(87) Numéro de publication internationale: WO 2021/165324

(56) Documents cités:
- CN-U- 203 254 985
- DE-A1- 102018 208 837
- US-A1- 2015 375 865
- US-A1- 2016 304 207
- US-A1- 2017 282 755
- US-A1- 2018 170 550

## Description

### DOMAINE TECHNIQUE

La présente invention appartient au domaine général de l'avionique, notamment des systèmes de commande des équipements de bord d'un aéronef de type avion, et concerne plus particulièrement un système et un procédé pour commander un siège d'aéronef et/ou son environnement via une connexion sans-fil, telle que le Bluetooth, au moyen d'un appareil électronique portable tel qu'un smartphone.

### ÉTAT DE L'ART

Les compagnies aériennes sont soumises à une exigence constante concernant la réduction de leurs coûts d'exploitation. Un moyen courant d'économiser les coûts d'exploitation consiste à réduire le poids de l'avion. En effet, la réduction du poids permet aux compagnies aériennes de réduire les coûts en carburant. Ces derniers étant considérables, les compagnies aériennes doivent donc trouver un moyen pour rester compétitives et rentables.

Dans la conception des sièges d'avion, le poids est une considération importante qui peut souvent limiter la flexibilité de la conception du siège car les composants électromécaniques nécessaires à la mise en œuvre des différentes fonctionnalités ou de l'automatisation ainsi que les systèmes de câblage complexes reliant les composants peuvent augmenter le poids du siège d'avion au-delà des limites admissibles. Par exemple, une unité de commande de siège SCU (*Seat Control Unit*) peut transmettre des signaux de commande initiés par le passager à une série d'actionneurs de siège, de luminaires, de dispositifs de confort et de massage, etc., regroupés sous l'appellation : unités remplaçables en ligne LRU (*Line-Replaceable Units*), à l'intérieur du siège du passager. Dans certains exemples, la SCU et les LRU sont interconnectées en série ou en étoile par un bus de données (par exemple, CANBUS) qui permet aux LRU de communiquer entre elles. Chacune des LRU peut inclure une unité de contrôle électronique ECU (*Electric Control Unit*) et servir de contrôleur principal pour les autres LRU du siège. Le câblage du bus de données ainsi que le câblage d'alimentation et le blindage contre les interférences électromagnétiques (EMI) qui y est associé peuvent entraîner des configurations de câblage complexes à l'intérieur du siège passager à espace limité qui peuvent être difficiles à identifier ainsi qu'une augmentation du poids en raison du câblage et des composants de traitement (par exemple, les ECU) installés dans les LRU. En outre, la maintenance des LRU peut être un processus difficile et complexe en raison de la densité du câblage dans les sièges passagers et de la complexité électronique des LRU.

Par exemple, les règlements de la FAA (*Federal Aviation Administration)* exigent que les compagnies aériennes fournissent aux passagers un système de service aux passagers à bord qui communique les fonctions de base du service aux passagers, telles que l'appel du personnel de bord et l'allumage et l'extinction des lampes de lecture, au système de contrôle de l'avion.

Les compagnies aériennes fournissent traditionnellement des systèmes de service aux passagers qui sont connectés au système de gestion de la cabine de l'avion. Ces systèmes comprennent généralement une unité de contrôle des passagers qui est installée dans un siège et câblée au système de service aux passagers, de sorte que les passagers peuvent utiliser l'unité de contrôle des passagers pour appeler le personnel de bord ou contrôler une lampe de lecture. Toutefois, ces systèmes traditionnels de service aux passagers installés dans les sièges ont un coût en poids important. Le coût en poids du câblage d'une unité de contrôle des passagers sur chaque siège d'un avion, et de la fourniture de tout interrupteur ou unité de contrôle pour coordonner la transmission des signaux des unités de contrôle des passagers vers le système de gestion de la cabine de l'avion, peut atteindre plusieurs milliers de kilogrammes. Par conséquent, il est nécessaire de disposer d'un système de service aux passagers sans-fil qui communique les fonctions de service aux passagers d'une unité de contrôle des passagers au système de gestion de la cabine d'un avion, qui peut être moins lourd que les systèmes de service aux passagers traditionnels.

Le document WO2015200368A1 concerne un système sans-fil de services pour passagers pour un aéronef ayant un système d'alimentation et un système de gestion de cabine qui comporte un récepteur sans-fil et une unité de commande sans-fil de passager. Le récepteur sans-fil est capable de recevoir un signal sans-fil et est connecté de manière fonctionnelle au système d'alimentation et au système de gestion de cabine de l'aéronef. L'unité de commande sans-fil de passager est capable d'envoyer un signal. En réponse à la réception d'un signal provenant de l'unité de commande sans-fil de passager, le récepteur est configuré pour activer au moins une fonction de service pour passager du système de gestion de cabine de l'aéronef. US 2016/304207 A1 présente aussi un système sans-fil pour passagers.

A la connaissance du demandeur, aucune solution ne permet actuellement aux passagers de commander leurs sièges et de communiquer avec le personnel de bord par une simple connexion sans-fil et un protocole d'appairage simplifié.

### PRÉSENTATION DE L'INVENTION

La présente invention a pour but principal de pallier les limitations de l'art antérieur et de proposer une nouvelle solution pour commander un siège d'aéronef, facilement transposable à différents types de sièges et de systèmes d'actionnement de siège.

À cet effet, la présente invention a pour objet un système de commande d'un siège et de son environnement dans une cabine d'un moyen de transport tel qu'un aéronef, tel que défini dans la revendication 1.

Avantageusement, le module de communication sans-fil est apte à communiquer sur un réseau local tel que le Wi-Fi et/ou sur un réseau personnel tel que le Bluetooth.

D'autres protocoles de communication sans-fil peuvent être utilisés parmi lesquels on peut citer de manière non exhaustive : LoRaWan, WAIC, SmartMesh, Sigfox, Zigbee, l'infrarouge, la communication radio, Li-Fi, etc.

Selon un mode de réalisation préféré, le module de communication sans-fil comprend un module Bluetooth basse énergie BLE comportant une antenne BLE couplée à une carte électronique.

Selon un mode de réalisation, l'appareil électronique portable est un smartphone, une tablette numérique tactile ou un ordinateur portable.

De façon particulièrement avantageuse, l'appareil électronique portable permet de commander des actionneurs et des équipements du siège et de son environnement parmi des moteurs électriques de changement de positions du siège entre au moins une position assise et une position de couchage, une lampe personnelle, un ventilateur personnel, un dispositif de divertissement, et un dispositif d'appel du personnel de bord.

Selon un mode de réalisation, l'interface informatique correspond à un programme applicatif installé sur l'appareil électronique portable ou à une page web accessible via le réseau local ou internet.

Par exemple, l'appareil électronique portable est un smartphone ou une tablette numérique, et le programme informatique applicatif est une application mobile présentant une interface graphique permettant au passager de commander directement les actionneurs et/ou effecteurs du siège.

L'invention a également pour objet un procédé de commande, mis en œuvre par un système de commande tel que présenté, comprenant :
- une étape d'appairage sécurisé pour connecter l'au moins un appareil électronique portable à l'unité de commande fonctionnelle du siège ;
- une étape d'accès à un menu principal du programme informatique applicatif, ledit menu étant affiché sur une interface graphique dudit programme ; et
- une étape de commande d'une fonctionnalité du siège, associée à un actionneur, directement sur ladite interface graphique.

Avantageusement, l'étape d'appairage sécurisé comprend une lecture d'un code QR situé sur le siège par une caméra de l'appareil électronique portable.

Plus avantageusement encore, l'étape d'appairage sécurisé comprend une action ou une combinaison d'actions parmi une lecture de code QR par l'appareil électronique portable, un renseignement de code sur ledit appareil, une identification du passager, et une synchronisation du programme informatique applicatif de commande du siège avec un autre programme informatique comportant le numéro du siège du passager.

Selon un mode de réalisation préféré, le moyen de transport est un avion commercial et le siège est un fauteuil convertible situé dans une classe de confort supérieure telle que la première classe.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un système et d'un procédé de commande sans-fil conformes aux principes de l'invention.

### BRÈVE DESCRIPTION DES FIGURES

Les figures ainsi que les éléments d'une même figure ne sont pas nécessairement à la même échelle. Sur l'ensemble des figures, les éléments identiques ou équivalents portent la même référence numérique.

Il est ainsi illustré en :
- Figure 1 : un schéma fonctionnel du système de commande sans-fil selon l'invention ;
- Figure 2 : une vue schématique d'une interface graphique d'une application mobile selon l'invention ;
- Figure 3 : une schématisation du fonctionnement synergique entre un appareil électronique portable, une unité de commande fonctionnelle du siège et une unité de commande électrique selon l'invention ;
- Figure 4 : les principales étapes d'un procédé de commande d'un siège par un appareil électronique portable via une connexion sans-fil ;
- Figure 5 : une vue schématique de l'interface de l'application mobile lors de l'appairage par lecture de code QR.

### DESCRIPTION DÉTAILLÉE DE MODES DE RÉALISATION

Dans le mode de réalisation décrit ci-après, on fait référence à un système de commande d'un siège d'aéronef et/ou de son environnement par une liaison sans-fil de type Bluetooth, Wi-Fi ou autre. Cet exemple, non limitatif, est donné pour une meilleure compréhension de l'invention et n'exclut pas son utilisation dans d'autres moyens de transport offrant un niveau de confort adapté.

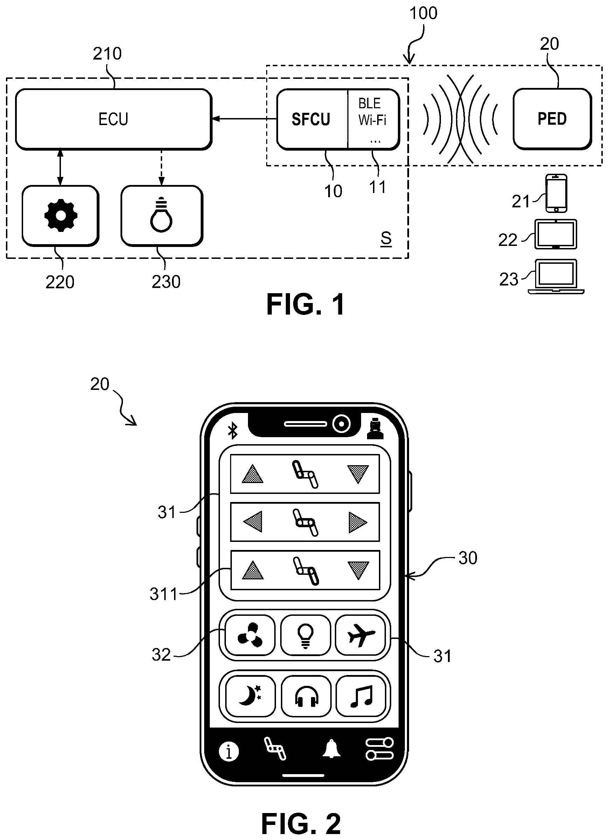

La figure 1 représente schématiquement le fonctionnement d'un système de commande sans-fil 100 permettant à un passager occupant un siège, non représenté, dans une cabine d'aéronef d'interagir avec des fonctionnalités du siège et/ou de l'environnement dudit siège. Parmi les fonctionnalités usuelles proposées aux passagers d'un avion commercial, on peut citer la configuration du siège, le réglage de la lumière et de la ventilation, et l'appel du personnel de bord. Un type d'interaction est par exemple le contrôle de la position des différentes parties du siège (dossier, assise, repose-jambes, ottoman, cloison, minibar, etc.) de sorte à configurer le siège dans une position normale, de repos ou de couchage. En général, les sièges d'un avion proposant une classe de confort telle qu'une première classe sont convertibles, au moins entre une position assise et une position de couchage.

Le système de commande sans-fil 100 comprend principalement une unité de commande fonctionnelle du siège 10 apte à se connecter par une liaison sans-fil à un appareil électronique portable 20 appartenant au passager, pour permettre à ce dernier d'interagir avec tout ou partie des fonctionnalités du siège, ladite unité étant reliée à une unité de commande électrique 210 qui commande les différents actionneurs et effecteurs du siège, électromécaniques 220 tels que les moteurs opérant les mouvements du siège, et/ou électriques 230 tels que la lampe de lecture et le ventilateur.

L'unité de commande fonctionnelle du siège 10, ci-après désignée par son acronyme anglosaxon SFCU (pour *Seat Fonctional Control Unit),* se présente sous forme d'un clavier ou d'un écran tactile pour contrôler différentes fonctionnalités du siège, ou simplement sous forme d'un seul bouton pour contrôler le mouvement du siège. Ainsi, la SFCU permet selon le degré de motorisation et d'options du siège de contrôler la position du siège pour obtenir la configuration souhaitée (assise selon différentes inclinaisons ou de couchage), d'allumer et éteindre la lampe de lecture (spot lumineux individuel), de régler son intensité et/ou sa couleur, de régler la ventilation et/ou la climatisation, de naviguer dans le service de divertissement proposé tel que les chaines audio ou autres et de régler le volume sonore du casque audio branché, de solliciter la venue du personnel de bord, etc.

D'autres fonctionnalités peuvent également être gérées par la SFCU, notamment l'interaction du passager avec le personnel de bord, par exemple pour choisir et/ou commander des repas, demander un service spécial, activer le mode « ne pas déranger », etc.

L'appareil électronique portable 20, ci-après désigné par son acronyme anglosaxon PED (pour *Portable Electronic Device*) employé dans le jargon de l'aviation civile, peut être tout dispositif électronique personnel apte à communiquer sans fil, à traiter des données et doté d'une capacité de calcul, tel qu'un smartphone 21, une tablette numérique 22, un ordinateur portable 23 et analogues.

Afin que le PED 20 communique avec la SFCU 10, ce dernier est avantageusement équipé d'un module de communication sans-fil 11 lui permettant d'établir une connexion sans-fil avec le PED.

Le module de communication sans-fil 11 peut communiquer sur un réseau local, tel que le Wi-Fi, et/ou un réseau personnel tel que le Bluetooth, de préférence le Bluetooth à basse énergie BLE (*Bluetooth Low Energy*), et comprend à cet effet une antenne BLE couplée à une carte électronique spécifique.

Le PED peut également être équipé de plusieurs modules de communication sans-fil ou d'un module global lui permettant d'établir des connexions sur différents réseaux et suivant différents protocoles de communication sans-fil.

Il convient de noter que le module de communication sans-fil 11 peut être ajouté à des SFCU existantes avec une modification des algorithmes de gestion des trames, de sorte à obtenir un système de commande sans-fil selon l'invention.

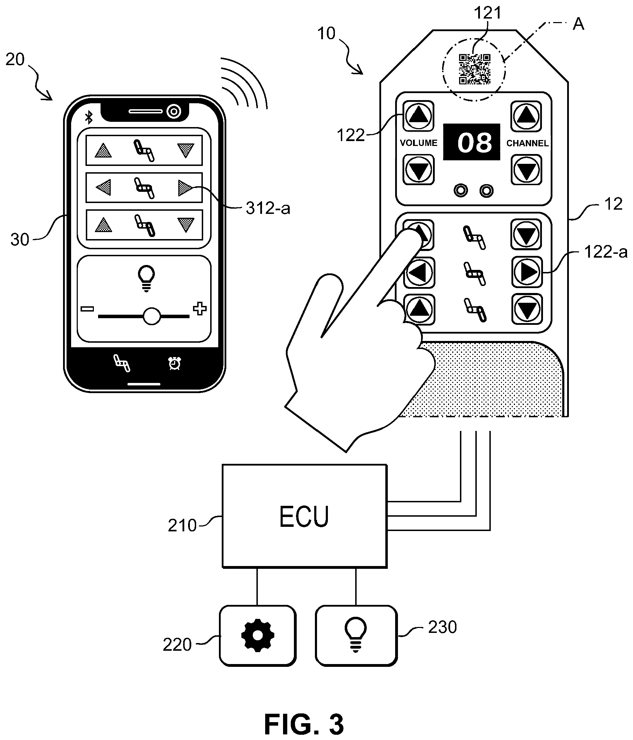

En outre, la SFCU continue de fonctionner normalement, en exécutant les commandes manuelles, provenant du clavier par exemple, tout en recevant les commandes du PED transmises par la connexion sans-fil comme schématisé en figure 3.

L'utilisation du système de commande sans-fil 100 par le passager d'un siège nécessite une application mobile dédiée installée sur le PED 20.

Dans le cas d'un ordinateur portable 23, le passager dispose bien entendu d'une interface de programmation applicative (API) ou d'une page web (espace personnel) pour interagir avec le siège et son environnement.

La figure 2 représente un exemple d'interface graphique 30 que peut avoir l'application mobile et qui permet, de façon simple et intuitive, de commander différentes fonctionnalités du siège et de l'environnement du siège. Selon l'exemple illustré, l'interface graphique de l'application mobile comprend des fenêtres 31, chacune pouvant correspondre à un composant par exemple le siège ou à un regroupement de fonctionnalités 32, l'utilisateur pouvant également personnaliser le contenu desdites fenêtres selon ses préférences parmi l'ensemble des fonctionnalités possibles. L'accès à chaque fonctionnalité 32 est par exemple effectué par l'appui sur une icône.

Ainsi, l'application mobile installée sur le PED peut commander des fonctionnalités parmi : la position des différentes parties du sièges, à savoir l'appui-tête, le dossier, l'assise, le repose-jambes et autres, l'affichage des informations de vol comme l'itinéraire, la durée, etc., la ventilation, la lumière de lecture, la lumière d'ambiance, le service multimédia, l'alarme, l'appel du personnel de bord, etc.

De plus, le PED peut permettre des commandes supplémentaires et/ou plus précises que celles proposées par la SFCU. Par exemple, le PED peut permettre de préciser la nature de l'appel au personnel de bord (repas, couverture, urgence, etc.) lorsque la SFCU ne permet que d'appeler le personnel sans préciser la nature de la demande.

En référence à la figure 3, l'application de commande du siège peut proposer un bouton 312-a correspondant à un bouton 122-a physique du clavier de la SFCU.

Lorsqu'il s'agit de la position du siège convertible, le passager peut régler manuellement la position et/ou l'inclinaison des différentes parties du siège, comme représenté en figure 2, ou sélectionner une position prédéfinie comme la position de couchage, auquel cas l'application dispose d'une icône d'accès rapide à cette position.

L'objet de la présente invention n'est pas de lister les différentes possibilités que peut offrir une application mobile dédiée à la commande d'un siège et de son environnement, mais d'expliquer le principe de commande via une liaison sans-fil entre la SFCU et le PED, l'adaptation et l'ajout de nouvelles fonctionnalités constituant des mesures dont la mise en œuvre ne présente aucune difficulté particulière. Ainsi, les applications de commande du siège peuvent être développées sur mesure à la demande des exploitants tels que les compagnies aériennes ou les avionneurs. De plus, l'application doit être adaptée à chaque classe de confort afin de tenir compte des différentes fonctionnalités offertes.

Le système de commande sans-fil 100 ainsi décrit permet de mettre en œuvre un procédé de commande de siège au moyen d'un PED, ledit procédé comprenant principalement :
- une étape 500 d'appairage sécurisé pour connecter le PED 20 à la SFCU 10 ;
- une étape 510 d'accès au menu principal de l'application mobile dédiée ;
- une étape 520 de commande par le passager pour activer une fonctionnalité du siège ou de son environnement ;
- une étape 530 de transmission du PED vers la SFCU de la commande enregistrée ;
- une étape 600 de gestion des trames reçues par la SFCU ;
- une étape 610 de transmission de la commande du SFCU vers l'ECU ;
- une étape 700 de transmission de la commande de l'ECU vers l'actionneur concerné ; et
- une étape 710 d'exécution de la commande par ledit actionneur.

L'étape 500 d'appairage sécurisé permet au passager de connecter son PED au SFCU via le module de communication sans-fil de ce dernier. La connexion peut s'opérer sur un réseau Bluetooth, de préférence BLE, Wi-Fi, sur le réseau de divertissement en vol IFE (*In-Flight Entertainment*), ou sur tout autre réseau de communication sans-fil local ou personnel (Li-Fi, Lora, etc.). Etant donné que le réseau Wi-Fi équipe de plus en plus d'avions de ligne pour permettre aux passagers d'accéder à internet, ou tout le moins à certains services limités comme les messageries instantanées, il est préférable que la connexion sans-fil du système de commande se fasse sur un réseau Bluetooth pour ne pas impacter le débit du réseau Wi-Fi en cabine. D'autant plus que la majorité des PED dispose d'une connexion Bluetooth.

La procédure d'appairage sécurisé doit permettre à chaque passager de se connecter à son siège, plus précisément à la SFCU de son siège, uniquement sans risque de connexion erronée à un autre siège. De ce fait, il peut être envisagé différents protocoles d'appairage ou une combinaison de protocoles parmi : le scan d'un code QR situé sur le siège du passager, par exemple le code 121 sur le clavier 10 en figure 3 ; le renseignement d'un code figurant sur la SFCU, la synchronisation de l'application de commande du siège avec l'application de la compagnie aérienne faisant figurer le numéro du siège passager ; la connexion automatique en fonction de la distance entre le PED et la SFCU qui détermine la puissance du signal BLE ; la communication en champ proche NFC (*Near Field Communication*) lorsque le PED est équipé d'un capteur NFC ; et tout autre moyen connu permettant d'établir un appairage entre deux dispositifs communicants proches.

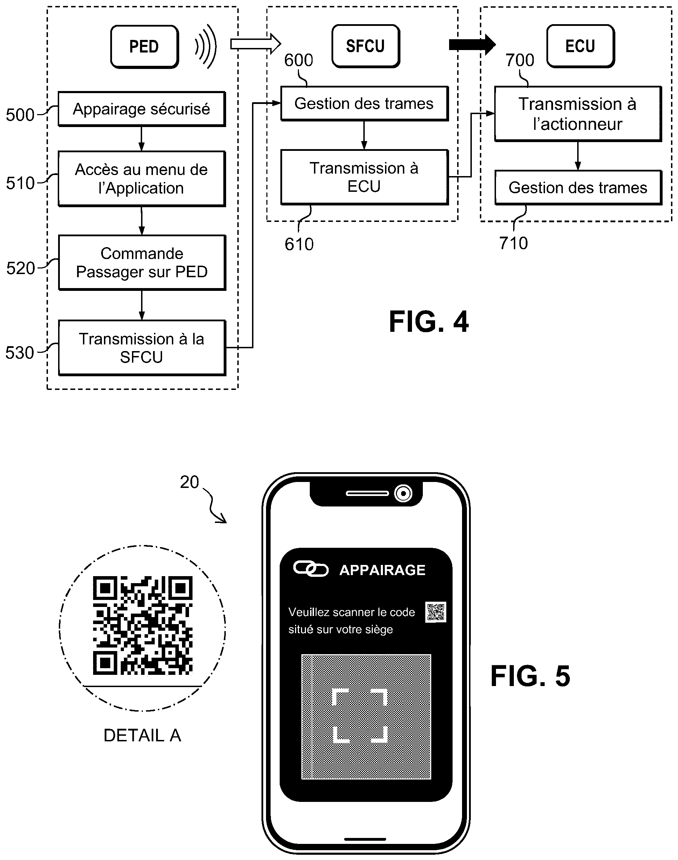

La figure 5 représente un exemple de fenêtre de lecture de code QR par le PED que peut proposer l'application de commande avant l'accès au menu principal.

L'étape 510 d'accès au menu principal ne survient que lorsque l'étape d'appairage sécurisé s'est déroulée avec succès afin de permettre au passager d'interagir avec les différentes fonctionnalités proposées. Ainsi, le passager peut régler les différents paramètres de confort de son siège sans avoir à se déplacer ou à atteindre un bouton éloigné, simplement avec son smartphone à portée de main quelle que soit sa position, ou son ordinateur portable. La commande du siège est par conséquent centralisée, ce qui améliore l'expérience du passager lors du vol.

L'étape 520 de commande consiste à utiliser le PED pour modifier les paramètres du siège et de son environnement, en appuyant par exemple sur l'écran tactile d'un smartphone ou d'une tablette, ou par commande vocale avec des expressions clés simple du type « mode couchage », « éteindre lumière », etc. Ce dernier cas peut être réservé aux suites des premières classes offrant une certaine intimité pour ne pas importuner les autres passagers à proximité.

Ensuite, les étapes 530 à 710 s'exécutent automatiquement entre les différents niveaux : transmission sans-fil entre le PED et la SFCU, puis transmission par connexion électrique enter la SFCU, l'ECU et les différents actionneurs et équipements.

Il convient de noter que la présente invention peut être déployée directement sur les ECU de sièges qui ne disposeraient pas de SFCU, autrement dit, le module de communication sans-fil peut être installé directement sur l'ECU avec un niveau de sécurité de programmation plus élevé.

Le système de commande sans-fil selon l'invention permet également d'enregistrer les historiques de commandes des passagers sur chaque vol et pour chaque siège, et d'exploiter ces données afin d'améliorer la maintenance des sièges par exemple. En effet, les données recueillies peuvent être traitées et classées par des techniques de big data pour permettre aux constructeurs aéronautiques, aux équipementiers, aux compagnies aériennes et autres d'optimiser leurs interventions et opérations de maintenance. Par exemple, les sièges ayant enregistrés le plus de manipulations de changement de positions sont sujets à une fatigue de leurs pièces mécaniques plus importante. De plus, le module de communication sans-fil équipant la SFCU permet de transmettre des données de maintenance et de big data issues de l'ECU à un terminal mobile d'un opérateur de maintenance et/ou de surveillance, lui évitant ainsi de se brancher sur les SFCU et/ou les ECU de tous les sièges de la cabine un à un pour récupérer ces mêmes données.

L'application mobile de commande du siège peut également incorporer un modèle prédictif d'apprentissage automatique pour proposer aux passagers récurrents des réglages prédéfinis soit uniquement au début du vol soit tout au long du vol avec par exemple la sélection d'un mode automatique.

Le système de commande sans-fil selon l'invention présente également un intérêt en termes de réduction des coûts et temps de développement. En effet, le niveau de criticité généralement requis pour les SFCU principales, selon les normes DAL *(Development Assurance Level),* est le C. Ce niveau correspond au cas dans lequel un défaut du système considéré, en l'occurrence la SFCU principale, peut provoquer un problème majeur entrainant un dysfonctionnement des équipements vitaux de l'avion. Les SFCU secondaires et les éléments de confort sont quant à eux généralement développés en DAL D ou E, autrement dit, les défauts sont sans effet sur la sécurité du vol. De ce fait, on peut considérer que le PED est un moyen secondaire de commande du siège, auquel cas la partie électronique gérant la connexion BLE dans la SFCU peut être développée en DAL D ou E selon les cas. Ce qui permet de réduire considérablement son coût de développement.

## Revendications

1. Système (100) de commande d'un siège et de son environnement dans une cabine d'un moyen de transport tel qu'un aéronef, comprenant une unité de commande fonctionnelle du siège (10) reliée à une unité de commande électrique (210) permettant d'actionner des actionneurs et/ou des effecteurs électriques (220, 230) tels que des moteurs électriques du siège, qui comprend en outre au moins un appareil électronique portable (20) associé à un passager dudit siège,
dans lequel l'unité de commande fonctionnelle du siège comporte un module de communication sans-fil (11) apte à établir une liaison sans-fil avec l'au moins un appareil électronique portable,
dans lequel ledit appareil permet au passager, au moyen d'une interface informatique (30) dédiée, de commander les actionneurs et/ou les effecteurs du siège, et de communiquer avec un personnel de bord sur un réseau local du moyen de transport, ledit module de communication sans-fil étant apte à communiquer sur ledit réseau local,
et **caractérisé en ce que** ladite unité de commande fonctionnelle du siège (10) se présente sous forme d'un clavier ou d'un écran tactile pour contrôler différentes fonctionnalités du siège, ladite unité continuant de fonctionner normalement, en exécutant des commandes manuelles, provenant du clavier par exemple, tout en recevant des commandes de l'appareil électronique portable (20) transmises par la connexion sans-fil au moyen dudit module de communication sans-fil (11).

2. Système de commande selon la revendication 1, dans lequel le module de communication sans-fil (11) est apte à communiquer sur un réseau local tel que le Wi-Fi et/ou sur un réseau personnel tel que le Bluetooth.

3. Système de commande selon l'une des revendications 1 ou 2, dans lequel le module de communication sans-fil (11) comprend un module Bluetooth basse énergie BLE comportant une antenne BLE couplée à une carte électronique.

4. Système de commande selon l'une quelconque des revendications précédentes, dans lequel au moins un appareil électronique portable (20) est un smartphone (21), une tablette numérique tactile (22) ou un ordinateur portable (23).

5. Système de commande selon l'une quelconque des revendications précédentes, dans lequel l'au moins un appareil électronique portable (20) permet de commander des actionneurs et des équipements du siège et de son environnement parmi des moteurs électriques de changement de positions du siège, une lampe personnelle, un ventilateur personnel, un dispositif de divertissement, et un dispositif d'appel du personnel de bord.

6. Système de commande selon l'une quelconque des revendications précédentes, dans lequel l'interface informatique (30) correspond à un programme applicatif installé sur l'appareil électronique portable (20) ou à une page web accessible via le réseau local ou internet.

7. Système de commande selon la revendication 6, dans lequel l'au moins un appareil électronique portable (20) est un smartphone (21) ou une tablette numérique (22), et dans lequel le programme informatique applicatif est une application mobile permettant de commander directement les actionneurs et/ou effecteurs du siège.

8. Procédé de commande, mis en œuvre par un système (100) de commande selon l'une des revendications 1 à 7, **caractérisé en ce qu'**il comprend :
- une étape (500) d'appairage sécurisé pour connecter l'au moins un appareil électronique portable (20) à l'unité de commande fonctionnelle du siège (10) ;
- une étape (510) d'accès à un menu principal du programme informatique applicatif, ledit menu étant affiché sur une interface graphique (30) dudit programme ;
- une étape (520) de commande d'une fonctionnalité du siège, associée à un actionneur, directement sur ladite interface graphique.

9. Procédé de commande selon la revendication 8, dans lequel l'étape (500) d'appairage sécurisé comprend une lecture d'un code QR situé sur le siège par une caméra de l'au moins un appareil électronique portable (20).

10. Procédé de commande selon l'une des revendications 8 ou 9, dans lequel l'étape (500) d'appairage sécurisé comprend une action ou une combinaison d'actions parmi une lecture de code QR par l'au moins un appareil électronique portable (20), un renseignement de code sur ledit appareil, une identification du passager, et une synchronisation du programme informatique applicatif de commande du siège avec un autre programme informatique comportant le numéro du siège du passager.

11. Procédé de commande selon l'une quelconque des revendications 8 à 10, dans lequel le moyen de transport est un avion commercial et le siège est un fauteuil convertible situé dans une classe de confort supérieure telle que la première classe.

## Patentansprüche

1. System (100) zur Steuerung eines Sitzes und seiner Umgebung in einer Kabine eines Transportmittels wie einem Flugzeug, umfassend eine funktionale Sitzsteuereinheit (10), die mit einer elektrischen Steuereinheit (210) verbunden ist, die es ermöglicht, elektrische Aktoren und/oder Effektoren (220, 230) wie Elektromotoren des Sitzes zu betätigen, das ferner mindestens ein mit einem Fahrgast des Sitzes verbundenes tragbares elektronisches Gerät (20) umfasst, wobei die funktionale Sitzsteuereinheit ein drahtloses Kommunikationsmodul (11) aufweist, das dazu ausgelegt ist, eine drahtlose Verbindung mit dem mindestens einen tragbaren elektronischen Gerät herzustellen, wobei das Gerät es dem Fahrgast ermöglicht, mittels einer dafür vorgesehenen Computerschnittstelle (30) die Aktoren und/oder Effektoren des Sitzes zu steuern und mit einem Bordpersonal über ein lokales Netzwerk des Transportmittels zu kommunizieren, wobei das drahtlose Kommunikationsmodul dazu ausgelegt ist, über das lokale Netzwerk zu kommunizieren, und **dadurch gekennzeichnet ist, dass** die funktionale Steuereinheit des Sitzes (10) in Form einer Tastatur oder eines Touchscreens zur Steuerung verschiedener Funktionen des Sitzes vorliegt, wobei die Einheit weiterhin normal funktioniert, indem sie manuelle Befehle, beispielsweise von der Tastatur, ausführt und gleichzeitig Befehle von dem tragbaren elektronischen Gerät (20) empfängt, die über die drahtlose Verbindung mittels dieses drahtlosen Kommunikationsmoduls (11) übertragen werden.

2. Steuersystem nach Anspruch 1, wobei das drahtlose Kommunikationsmodul (11) dazu ausgelegt ist, über ein lokales Netzwerk wie WLAN und/oder ein persönliches Netzwerk wie Bluetooth zu kommunizieren.

3. Steuersystem nach einem der Ansprüche 1 oder 2, wobei das drahtlose Kommunikationsmodul (11) ein Bluetooth Low Energy-Modul, BLE-Modul, umfasst, das eine BLE-Antenne umfasst, die mit einer Elektronikkarte gekoppelt ist.

4. Steuersystem nach einem der vorhergehenden Ansprüche, wobei mindestens ein tragbares elektronisches Gerät (20) ein Smartphone (21), ein digitales Touchscreen-Tablet (22) oder ein Laptop (23) ist.

5. Steuersystem nach einem der vorhergehenden Ansprüche, wobei das mindestens eine tragbare elektronische Gerät (20) es ermöglicht, Aktoren und Ausrüstungen des Sitzes und seiner Umgebung unter elektrischen Motoren zum Ändern der Sitzposition, einer persönlichen Lampe, einem persönlichen Lüfter, einer Unterhaltungsvorrichtung und einer Personalrufvorrichtung an Bord zu steuern.

6. Steuersystem nach einem der vorhergehenden Ansprüche, wobei die Computerschnittstelle (30) einem auf dem tragbaren elektronischen Gerät (20) installierten Anwendungsprogramm oder einer über das lokale Netzwerk oder das Internet zugänglichen Webseite entspricht.

7. Steuersystem nach Anspruch 6, wobei das mindestens eine tragbare elektronische Gerät (20) ein Smartphone (21) oder ein digitales Tablet (22) ist, und wobei das Anwendungscomputerprogramm eine mobile Anwendung ist, mit der die Aktoren und/oder Effektoren des Sitzes direkt gesteuert werden können.

8. Steuerverfahren, umgesetzt durch ein Steuersystem (100) nach einem der Ansprüche 1 bis 7, **dadurch gekennzeichnet, dass** es Folgendes umfasst:
- einen Schritt (500) des sicheren Koppelns zum Verbinden des mindestens einen tragbaren elektronischen Geräts (20) mit der funktionalen Sitzsteuereinheit (10);
- einen Schritt (510) des Zugreifens auf ein Hauptmenü des Anwendungscomputerprogramms, wobei das Menü auf einer grafischen Schnittstelle (30) des Programms angezeigt wird;
- einen Schritt (520) des Steuerns einer Sitzfunktionalität, die mit einem Aktor verbunden ist, direkt auf der grafischen Schnittstelle.

9. Steuerverfahren nach Anspruch 8, wobei der Schritt (500) des sicheren Koppelns das Lesen eines QR-Codes, der sich auf dem Sitz befindet, durch eine Kamera des mindestens einen tragbaren elektronischen Geräts (20) umfasst.

10. Steuerverfahren nach einem der Ansprüche 8 oder 9, wobei der Schritt (500) des sicheren Koppelns eine Aktion oder eine Kombination von Aktionen aus dem Lesen eines QR-Codes durch das mindestens eine tragbare elektronische Gerät (20), einer Codeeingabe in das Gerät, einer Fahrgastidentifikation und einer Synchronisierung des Anwendungscomputerprogramms zur Sitzsteuerung mit einem anderen Computerprogramm, das die Nummer des Fahrgastsitzes aufweist.

11. Steuerverfahren nach einem der Ansprüche 8 bis 10, wobei das Transportmittel ein Geschäftsflugzeug ist und der Sitz ein verstellbarer Sessel in einer höheren Komfortklasse wie der ersten Klasse ist.

## Claims

1. A system (100) for controlling a seat and its environment in a cabin of a transport means such as an aircraft, comprising a functional control unit of the seat (10) connected to an electrical control unit (210) for actuating actuators and/or electrical effectors (220, 230) such as electric motors of the seat, which further comprises at least one portable electronic device (20) associated with a passenger of said seat, wherein the functional control unit of the seat comprises a wireless communication module (11) capable of establishing a wireless connection with the at least one portable electronic device, wherein said device allows the passenger, by means of a dedicated computer interface (30), to control the actuators and/or effectors of the seat, and to communicate with on-board personnel on a local network of the transport means , said wireless communication module being capable of communicating over said local network, and **characterized in that** said functional control unit of the seat (10) is in the form of a keyboard or a touch screen for controlling different functionalities of the seat, said unit continuing to operate normally, by executing manual commands, from the keyboard for example, while receiving commands from the portable electronic device (20) transmitted by the wireless connection by means of said wireless communication module (11).

2. The control system according to claim 1, wherein the wireless communication module (11) is able to communicate on a local network such as Wi-Fi and/or on a personal network such as Bluetooth.

3. The control system according to one of claims 1 or 2, wherein the wireless communication module (11) comprises a Bluetooth low-energy BLE module comprising a BLE antenna coupled to an electronic board.

4. The control system according to any one of the preceding claims, wherein at least one portable electronic device (20) is a smartphone (21), a touch digital tablet (22) or a laptop (23).

5. The control system according to any one of the preceding claims, wherein the at least one portable electronic device (20) allows controlling actuators and equipment of the seat and of its environment from among electric motors for changing positions of the seat, a personal lamp, a personal fan, an entertainment device, and an on-board crew call device.

6. The control system according to any one of the preceding claims, wherein the computer interface (30) corresponds to an application program installed on the portable electronic device (20) or to a web page accessible via the local network or the Internet.

7. The control system according to claim 6, wherein the at least one portable electronic device (20) is a smartphone (21) or a digital tablet (22), and wherein the application computer program is a mobile application allowing directly controlling the actuators and/or effectors of the seat.

8. A control method, implemented by a control system (100) according to one of claims 1 to 7, **characterized in that** it comprises:
- a secure pairing step (500) to connect the at least one portable electronic device (20) to the functional control unit of the seat (10);
- a step (510) of accessing a main menu of the application computer program, said menu being displayed on a graphical interface (30) of said program;
- a step (520) of controlling a functionality of the seat, associated with an actuator, directly on said graphical interface.

9. The control method according to claim 8, wherein the secure pairing step (500) comprises reading a QR code located on the seat by a camera of the at least one portable electronic device (20).

10. The control method according to one of claims 8 or 9, wherein the secure pairing step (500) comprises an action or a combination of actions from among QR code reading by the at least one portable electronic device (20), code information on said device, passenger identification, and synchronization of the control application computer program of the seat with another computer program including the number of the seat of the passenger.

11. The control method according to any one of claims 8 to 10, wherein the transport means is a commercial aircraft and the seat is a convertible chair located **in** a higher comfort class such as first class.
